(19) Europäisches Patentamt
European Patent Office
Office européen des brevets

(11) **EP 4 501 643 B1**

(12) # EUROPEAN PATENT SPECIFICATION


(45) Date of publication and mention of the grant of the patent:
**09.09.2026 Bulletin 2026/37**

(21) Application number: **23778709.8**

(22) Date of filing: **04.01.2023**

(51) International Patent Classification (IPC):
***B41J 2/01*** (2006.01) ***B41F 33/00*** (2006.01)
***B41J 2/21*** (2006.01) ***B41J 2/525*** (2006.01)
***B41J 3/407*** (2006.01) ***B41M 1/28*** (2006.01)
***B41M 1/40*** (2006.01) ***G01J 3/52*** (2006.01)
***G09F 5/04*** (2006.01) ***H04N 1/407*** (2006.01)
***H04N 1/54*** (2006.01) ***H04N 1/60*** (2006.01)
***B41F 17/22*** (2006.01)

(52) Cooperative Patent Classification (CPC):
**B41J 2/2114; B41F 17/22; B41F 19/007; B41J 2/01; B41J 2/21; B41J 2/2132; B41J 2/525; B41J 3/407; B41J 3/40733; B41J 3/413; B41M 1/28; B41M 1/40; G01J 3/52; G09F 5/04; H04N 1/407;** (Cont.)

(86) International application number:
**PCT/JP2023/000017**

(87) International publication number:
**WO 2023/188669 (05.10.2023 Gazette 2023/40)**


(54) **CAN PRINTING SYSTEM**

DOSENDRUCKSYSTEM

SYSTÈME D'IMPRESSION DE CANETTE


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2022 JP 2022058349**

(43) Date of publication of application:
**05.02.2025 Bulletin 2025/06**

(60) Divisional application:
**26195477.0**



(73) Proprietor: **Toyo Seikan Co., Ltd.**
**Tokyo 141-8640 (JP)**

(72) Inventors:
- **SAITO, Yukiko**
**Yokohama-shi, Kanagawa 230-0001 (JP)**
- **NAGATSUKA, Ryota**
**Yokohama-shi, Kanagawa 230-0001 (JP)**

(74) Representative: **Pfenning, Meinig & Partner mbB**
**Patent- und Rechtsanwälte**
**Theresienhöhe 11a**
**80339 München (DE)**



(56) References cited:
**WO-A1-2019/021739** **JP-A- 2001 272 276**
**JP-A- 2002 098 590** **JP-A- 2009 204 707**
**JP-A- 2010 002 310** **JP-A- 2010 002 310**
**JP-A- 2019 155 771** **JP-A- 2019 155 771**
**JP-A- S57 148 684** **US-A1- 2002 176 103**
**US-A1- 2016 155 367** **US-B2- 10 882 306**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**H04N 1/54; H04N 1/60**

## Description

### Technical Field

The present invention relates to a can printing system.

### Background Art

There is known a method that determines target colors of printing to be performed on a product based on a color sample (e.g., see Patent Literatures 1 and 2). A color guide optimized for can printing is not known. Further prior art is provided by Patent Literatures 3 and 4.

### Citation List

### Patent Literature

Patent Literature 1: JP 2005-303572 A
Patent Literature 2: JP 2019-184597 A
Patent Literature 3: JP 2019-155771 A
Patent Literature 4: JP 2010-002310 A

The present invention is defined by claim 1.

Further preferred embodiments are defined in the dependent claims.

According to the invention, a can printing system comprises: a printing machine that performs printing on a surface of a metal can; a color guide that includes a plurality of color patches obtained by printing an ink color used by the printing machine on a metal base material containing a metal identical to that of the metal can; an inkjet printer that reproduces an ink color selected from the plurality of color patches and performs printing for calibration to a surface of a can for calibration of the printing machine in such a way that a color difference between an ink color selected from the plurality of color patches and an ink color expressed by printing for calibration falls within a predetermined range of a color difference; and a computer that generates data for performing printing by the inkjet printer and provides the data to the inkjet printer.

As for the color guide, when the plurality of color patches are subjected to color measurement to acquire color coordinates of the plurality of color patches on a color space, a plurality of hue regions are obtained by segmenting the color space at predetermined hue angles, and color coordinates of one or more color patches of the plurality of color patches may be disposed in all of the plurality of hue regions. As for the color guide, a plurality of lightness/chroma regions are obtained by segmenting each of the plurality of hue regions at predetermined lightness widths and predetermined chroma widths, and color coordinates of the one or more color patches of the plurality of color patches may be disposed in predetermined lightness/chroma regions accounting for half or more of the plurality of lightness/chroma regions.

The plurality of hue regions may include regions obtained by classifying values of a hue angle h° every 5° to 20°.

The plurality of hue regions may include regions obtained by classifying values of a hue angle h° into $10° \leq h° < 20°$, $20° \leq h° < 30°$, $30° \leq h° < 40°$, $40° \leq h° < 50°$, $50° \leq h° < 60°$, $60° \leq h° < 75°$, $75° \leq h° < 90°$, $90° \leq h° < 105°$, $105° \leq h° < 120°$, $120° \leq h° < 135°$, $135° \leq h° < 140°$, $140° \leq h° < 155°$, $155° \leq h° < 170°$, $170° \leq h° < 180°$, $180° \leq h° < 190°$, $190° \leq h° < 200°$, $200° \leq h° < 215°$, $215° \leq h° < 235°$, $235° \leq h° < 255°$, $255° \leq h° < 265°$, $265° \leq h° < 285°$, $285° \leq h° < 295°$, $295° \leq h° < 305°$, $305° \leq h° < 315°$, $315° \leq h° < 330°$, $330° \leq h° < 350°$, $350° \leq h° < 360°$, and $360° \leq h° < 10°$.

The plurality of lightness/chroma regions may include a plurality of lightness/chroma regions classified by a plurality of lightness classifications and a plurality of chroma classifications in each of the plurality of hue regions. The plurality of lightness classifications may be a plurality of lightness classifications obtained by classifying values of lightness L* every 10 to 30. The plurality of chroma classifications may be a plurality of chroma classifications obtained by classifying values of chroma C* every 20 to 40.

The plurality of lightness/chroma regions may include nine lightness/chroma classifications classified by lightness classifications and chroma classifications in each of the plurality of hue regions. The lightness classifications may be lightness classifications obtained by classifying values of lightness L* into $28 \leq L^* < 45$, $45 \leq L^* < 65$, and $65 \leq L^* < 85$. The chroma classifications may be chroma classifications obtained by classifying values of chroma C* into $0 \leq C^* < 30$, $30 \leq C^* < 60$, and $60 \leq C^* < 85$.

In the color guide, the color coordinates of the one or more color patches of the plurality of color patches may be arranged in an achromatic region obtained by classifying the color space into a region whose value of chroma C* is 2.0 or less. At this time, the color coordinates of the one or more color patches of the plurality of color patches may be arranged in

a region other than the achromatic region in each of the plurality of hue regions.

In the color guide, a minimum value of a color difference between each color patch included in the plurality of color patches and another color patch included in the plurality of color patches is $2 \leq \Delta E_{00} \leq 9$.

The plurality of color patches may include color patches obtained by printing the ink color of the printing machine on the metal base material by a printer of a type identical to that of the printing machine.

The plurality of color patches may include a color patch obtained by printing the ink color of the printing machine on the metal base material using ink containing a pigment and/or dye identical to that of ink of the printing machine.

The metal base material may be aluminum, an aluminum alloy, steel or a tin plate. Furthermore, the metal base material is a resin-coated metal plate.

The metal base material may be a can body part of a can, and the color patch may be a cut piece of the can body part.

A can manufacturing system may include the can printing system.

A color guide may include a plurality of color patches obtained by printing an ink color on a metal base material. The color guide may be a color guide that is used to reproduce an ink color selected from the plurality of color patches by an inkjet printer and perform printing for calibration.

When the plurality of color patches of the color guide are subjected to color measurement to acquire color coordinates of the plurality of color patches on a color space, a plurality of hue regions are obtained by segmenting the color space at predetermined hue angles, and color coordinates of one or more color patches of the plurality of color patches may be disposed in all of the plurality of hue regions. In the color guide, the color coordinates of the one or more color patches of the plurality of color patches may be arranged in half or more predetermined lightness/chroma regions of the plurality of lightness/chroma regions obtained by classifying the plurality of hue regions per predetermined lightness range and per predetermined chroma range.

The plurality of hue regions may include regions formed by classifying values of a hue angle h° every 5° to 20°.

The plurality of hue regions may include regions obtained by classifying values of a hue angle h° into 10° ≤ h°< 20°, 20° ≤ h°< 30°, 30° ≤ h°< 40°, 40° ≤ h°< 50°, 50° ≤ h°< 60°, 60° ≤ h°< 75°, 75° ≤ h°< 90°, 90° ≤ h°< 105°, 105° ≤ h°< 120°, 120° ≤ h°< 135°, 135° ≤ h°< 140°, 140° ≤ h°< 155°, 155° ≤ h°< 170°, 170° ≤ h°< 180°, 180° ≤ h°< 190°, 190° ≤ h°< 200°, 200° ≤ h°< 215°, 215° ≤ h°< 235°, 235° ≤ h°< 255°, 255° ≤ h°< 265°, 265° ≤ h°< 285°, 285° ≤ h°< 295°, 295° ≤ h°< 305°, 305° ≤ h°< 315°, 315° ≤ h°< 330°, 330° ≤ h°< 350°, 350° ≤ h°< 360°, and 360° ≤ h°< 10°.

The plurality of lightness/chroma regions may include a plurality of lightness/chroma regions classified by a plurality of lightness classifications and a plurality of chroma classifications in each of the plurality of hue regions. The plurality of lightness classifications may be a plurality of lightness classifications obtained by classifying values of lightness L* every 10 to 30. The plurality of chroma classifications may be a plurality of chroma classifications obtained by classifying values of chroma C* every 20 to 40.

The plurality of lightness/chroma regions may include nine lightness/chroma regions classified by lightness classifications and chroma classifications in each of the plurality of hue regions. The lightness classifications may be lightness classifications obtained by classifying values of lightness L* into 28 ≤ L* < 45, 45 ≤ L* < 65, and 65 ≤ L* < 85. The chroma classifications may be chroma classifications obtained by classifying values of chroma C* into 0 ≤ C* < 30, 30 ≤ C* < 60, and 60 ≤ C* < 85.

In the color guide, the color coordinates of the one or more color patches of the plurality of color patches may be arranged in an achromatic region obtained by classifying the color space into a region whose value of chroma C* is 2.0 or less. At this time, the color coordinates of the one or more color patches of the plurality of color patches may be arranged in a region other than the achromatic region in each of the plurality of hue regions.

In the color guide, a minimum value of a color difference between each color patch included in the plurality of color patches and another color patch included in the plurality of color patches is $2 \leq \Delta E_{00} \leq 9$.

The metal base material may be aluminum, an aluminum alloy, steel or a tin plate. Furthermore, the metal base material is a resin-coated metal plate.

The metal base material may be a can body part of a can, and the color patch may be a cut piece of the can body part.

A method for manufacturing a color guide may include: printing an ink color of a printing machine on a surface of the can body part; and forming a color patch. In the forming of the color patch, the can body part on which the ink color of the printing machine has been printed in the printing of the ink color may be cut to form the color patch.

A method for manufacturing a color guide may include: forming a plate-like base material; printing an ink color of a printing machine on a surface of the plate-like base material; and forming a color patch. In the forming of the plate-like base material, a can body part may be cut open to form the plate-like base material. In the forming of the color patch, the plate-like base material on which the ink color of the printing machine has been printed in the printing of the ink color may be cut to form the color patch.

The printing of the ink color may be printing the ink color of the printing machine by a printer of a type identical to that of the printing machine.

The printing of the ink color may be printing the ink color of the printing machine using ink containing a pigment and/or dye identical to that of ink of the printing machine.

Note that the above summary of the invention does not list all features of the present invention. Furthermore, sub-combinations of groups of these features can also be an invention.

Brief Description of Drawings

FIG. 1 illustrates an example of a can manufacturing system 100 according to the present embodiment.
FIG. 2 illustrates an example of a can printing system 10 according to the present embodiment.
FIG. 3 illustrates an example of a color guide manufacturing system 30 according to the present embodiment.
FIG. 4 illustrates an example of a flow of manufacturing the color guide 16 according to the present embodiment.
FIG. 5 illustrates an example of a flow of manufacturing the color guide 16 according to the present embodiment.
FIG. 6 illustrates an example of a flow of manufacturing the color guide 16 according to the present embodiment.
FIG. 7 illustrates an example of a flow of classifying a color space into a plurality of hue regions and an achromatic region, and classifying the plurality of hue regions and the achromatic region into a plurality of lightness/chroma regions and lightness regions, respectively, according to the present embodiment.
FIG. 8 illustrates an example of a plurality of hue regions and an achromatic region according to the present embodiment.
FIG. 9 illustrates an example of the plurality of hue regions and the achromatic region according to the present embodiment.
FIG. 10 illustrates an example of the plurality of lightness/chroma regions and the achromatic region according to the present embodiment.
FIG. 11 illustrates an example of a computer 2200 in which a plurality of aspects of the present invention may be entirely or partially embodied.

Description of Embodiments

Hereinafter, although the present invention will be described based on an embodiment of the present invention, the following embodiment does not limit the present invention according the claims. Furthermore, all combinations of features described in the embodiment are not necessarily indispensable for the solution of the invention.

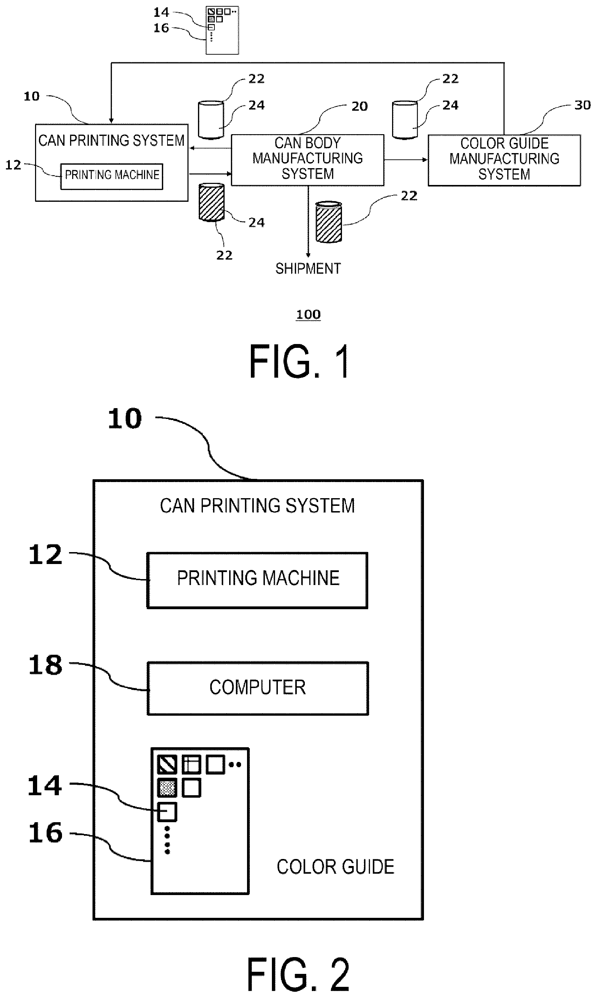

FIG. 1 illustrates an example of a can manufacturing system 100 according to the present embodiment. The can manufacturing system 100 manufactures a metal can 22 having an image printed on the surface thereof. The image expresses, for example, characters and patterns. The can manufacturing system 100 may include a can printing system 10. The can manufacturing system 100 may further include a can body manufacturing system 20 and a color guide manufacturing system 30.

The metal can 22 manufactured by the can manufacturing system 100 according to the present embodiment may be made of a metal having strength and stability usable for a can body. For example, the metal can 22 may be made of aluminum, an aluminum alloy, steel, or a tin plate. Furthermore, the metal can 22 may be a two-piece can, a three-piece can, or a bottle can. The metal can 22 may be a cup that has an opening at an end part and is made of the metal. The cross-sectional shape of the metal can 22 may be a circular shape or an elliptical shape, or may be a polygonal shape. The metal can 22 may have a bottom part at one end and an opening at the other end. At least part of a can body part 24 of the metal can 22 may be provided with a tapered shape or may not be provided with a tapered shape. The tapered shape may be a shape that expands outward toward the opening or may be a shape that expands outward toward the bottom part. The metal can 22 may be, for example, a three-piece can that has near the opening a tapered shape that expands outward toward the bottom part, or may be a cup that has a tapered shape that expands outward from the vicinity of the bottom part toward the opening. The contents to be filled in the metal can 22 may be beverages, foods, cosmetics, detergents, pharmaceuticals, medicines, and toys, and miscellaneous goods.

The can printing system 10 includes a printing machine 12. The printing machine 12 prints an image on the surface of the metal can 22. The image may be symbols, signs, characters, numbers, figures, colors, combinations thereof, or a design made by a combination thereof. Details of the can printing system 10 will be described later.

The can body manufacturing system 20 processes a material of the metal can 22 and manufactures a can body of the metal can 22. The can body manufacturing system 20 may manufacture two-piece cans, three-piece cans, bottle cans, and cups. The can body manufacturing system 20 may form the can body part 24 of the metal can 22 by performing drawing/ironing processing on a metal plate or welding a metal plate into a cylindrical shape. Furthermore, the can body manufacturing system 20 may perform neck-in processing and/or taper processing on the can body part 24 of the metal can 22. The can body manufacturing system 20 may include an uncoiler, a lubricator, a cupping press, a body maker, a

trimmer, a necker/flanger, a slitter, and a welder.

The color guide manufacturing system 30 manufactures a color guide 16 including a plurality of color patches 14. The color guide 16 can be used as a color sample for selecting ink colors of an image to be printed on the surface of the metal can 22 in the can printing system 10. Details of the color guide manufacturing system 30 will be described later.

The can manufacturing system 100 according to the present embodiment can manufacture the metal can 22 on which the ink colors selected from the color guide 16 are expressed with high reproducibility.

FIG. 2 illustrates an example of the can printing system 10 according to the present embodiment. The can printing system 10 may include the printing machine 12, the color guide 16 including the plurality of color patches 14, and a computer 18.

The printing machine 12 is a printer that prints an image on the surface of the metal can 22. The printing machine 12 may be a printing process printer such as a gravure printer, a flexographic printer, or an offset printer that performs printing using printing plates. The printing machine 12 may be an inkjet printer.

The printing machine 12 may be a printer that performs printing using ink of process colors such as cyan (C), magenta (M), yellow (Y), and black (K) and/or special color ink other than the process colors.

The printing machine 12 may perform printing on the can body part 24 of the metal can 22. The can body part 24 may be formed by performing the drawing/ironing processing on the metal plate. The printing machine 12 may include a plurality of printing plates and a blanket. The printing machine 12 may print an image on the surface of the metal can 22 by transferring ink on the printing plate to the blanket, and transferring the ink having been transferred to the blanket to the surface of the can body part 24 of the metal can 22.

The printing machine 12 may print an image on the can body part 24 by directly discharging ink from the inkjet head to the can body part 24. The printing machine 12 may print an image on the can body part 24 by discharging ink from the inkjet head to the blanket, and transferring the image formed on the blanket to the can body part 24.

The printing machine 12 may print an image on the can body part 24 by performing printing in advance on a portion at which the can body part 24 is formed in a metal plate that is a material of the metal can 22 after the metal plate is processed.

The can printing system 10 may further include a platemaking device. The platemaking device makes a plate to be used for the printing machine 12. The platemaking device may be a device that performs platemaking by a method such as DeskTop Publishing (DTP) or Computer To Plate (CTP).

The can printing system 10 may further include a calibration printer that calibrates the printing machine 12. The calibration printer is an inkjet printer. The inkjet printer may reproduce the ink colors of the color patches 14 using a plurality of ink, and perform printing for calibration.

The inkjet printer may perform printing for calibration in such a way that people can visually recognize the ink colors expressed by printing for calibration as the same colors or substantially the same colors as the ink colors of the color patches 14.

The inkjet printer may perform the calibration printing in such a way that the color difference between the ink colors expressed by printing for calibration and the ink colors of the color patches 14 fall within a predetermined range of the color difference. The predetermined range of the color difference may be, for example, $\Delta E_{00}$ = 4 or less or may be $\Delta E_{00}$ = 3 or less. Here, $\Delta E_{00}$ is an indicator of the color difference defined by JISZ8781-6: 2017 and ISO/CIE 11664-6: 2014(E).

The inkjet printer may reproduce the colors of the color patches 14 using ink colors such as cyan, magenta, yellow, and black. The inkjet printer may use ink colors other than these ink colors, and may further use ink colors such as white, light cyan, vivid magenta, vivid light magenta, orange, and green.

The inkjet printer may directly print ink colors on the surface of a can manufactured for calibration of the printing machine 12. At this time, the can having the surface on which the inkjet printer has printed the ink colors can be used as a calibration can used for calibration of the printing machine 12. Furthermore, the inkjet printer may also print ink colors on a film. At this time, the film on which the ink colors have been printed by the inkjet printer can be disposed on a surface of the can to manufacture a calibration can.

The can printing system 10 may further include one or more of a drying device that dries the ink printed by the printing machine 12, a curing device that cures the ink, a mandrel wheel that holds the metal can 22, and a transportation unit.

The color guide 16 can be used as the color sample for selecting ink colors of an image to be printed on the surface of the metal can 22. The color guide 16 may be the color guide 16 for the printing machine 12. The color guide 16 may include the plurality of color patches 14. The color guide 16 may be the color guide 16 for reproducing ink colors selected from the plurality of color patches 14 by the inkjet printer, and performing printing for calibration. The color patch 14 may be the color patch 14 obtained by printing an ink color on a metal base material. The metal base material may contain the same metal base material as that of the metal can 22.

The metal base material may be aluminum, an aluminum alloy, steel or a tin plate. Furthermore, the metal base material may be a resin-coated metal plate obtained by coating aluminum, an aluminum alloy, steel, or a tin plate with a polyester resin such as PolyEthylene Terephthalate (PET). The metal base material may be the can body part 24 of the

metal can 22, and the can body part 24 of the metal can 22 formed by the can body manufacturing system 20 may be used as the metal base material. The metal base material may be a flat plate before the can body is formed.

The color patch 14 is obtained by printing ink used by the printing machine 12 or ink of the same color on a metal base material, and expresses the ink colors of the printing machine 12. At this time, the color patch 14 may be a cut piece of the can body part 24. The color patch 14 may be a cut piece formed by cutting the can body part 24 printed with the ink colors of the printing machine 12. Furthermore, the color patch may be a color patch obtained by printing the ink colors of the printing machine 12 on the cut piece formed by cutting the can body part 24.

The number of the color patches 14 included in the color guide 16 is not limited. The color guide 16 may include, for example, the 100 or more color patches 14. The number of the color patches 14 may be 300 or more, 400 or more, or 500 or more. The number of the color patches 14 may be 1000 or less, 900 or less, or 800 or less.

The color guide 16 may be formed such that, when the plurality of color patches 14 are subjected to color measurement to acquire color coordinates of the plurality of color patches 14 on the color space, a plurality of hue regions are obtained by segmenting the color space at predetermined hue angles, and color coordinates of one or more color patches 14 of the plurality of color patches 14 are disposed in all of the plurality of hue regions.

Here, an achromatic region that has no hue may be provided separately from the plurality of hue regions. In the color guide 16, the color coordinates of the one or more color patches 14 of the plurality of color patches 14 may be arranged in the achromatic region obtained by classifying the color space into regions whose values of the chroma C* are 2.0 or less. At this time, the color coordinates of the one or more color patches 14 of the plurality of color patches 14 may be arranged in a region other than the achromatic region in each of the plurality of hue regions.

When the value of the chroma C* is a certain value (e.g., 2.0) or less, the human eyes can see only a grayish color regardless of the hue, and cannot distinguish the hue. Hence, as described above, the achromatic region common to a plurality of hues may be provided.

The color guide 16 may be formed such that the color coordinates of the one or more color patches 14 of the plurality of color patches 14 are arranged in half or more of predetermined lightness/chroma regions of a plurality of lightness/chroma regions obtained by classifying the plurality of hue regions per predetermined lightness range and per predetermined chroma range. Specific classification of the hue regions and the lightness/chroma regions and specific arrangement of the color coordinates of the color patches 14 in the hue regions and the lightness/chroma regions will be described later.

The computer 18 generates image data for performing printing by the printing machine 12, and provides the data to the printing machine 12. The image data may include information on ink colors selected from the color guide 16. The computer 18 may generate platemaking data for performing platemaking by the platemaking device and data for performing printing by the calibration printer, and provide these items of data to the platemaking device and the calibration printer.

The can printing system 10 according to the present embodiment can use as the color sample of the printing machine 12 the color guide 16 for which the metal base material containing the same metal as that of the product of the metal can 22 is used, so that, even when the hues of the ink colors change due to, for example, surface gloss of the metal can 22, it is possible to perform, on the metal can 22, printing that expresses the ink colors designated by the color guide 16 with high reproducibility. Consequently, it is possible to accurately designate the ink colors expressed on the product of the metal can 22 on the basis of the color guide 16, and it is possible to reduce the number of times of correction at the time of calibration of printing in the can printing system 10 and omit calibration, so that it is possible to reduce the time taken until final proof of printing and a workload.

Furthermore, the color guide 16 according to the present embodiment can provide the color sample that has a less unbalanced hue, lightness, and chroma and covers the hue, the lightness, and the chroma.

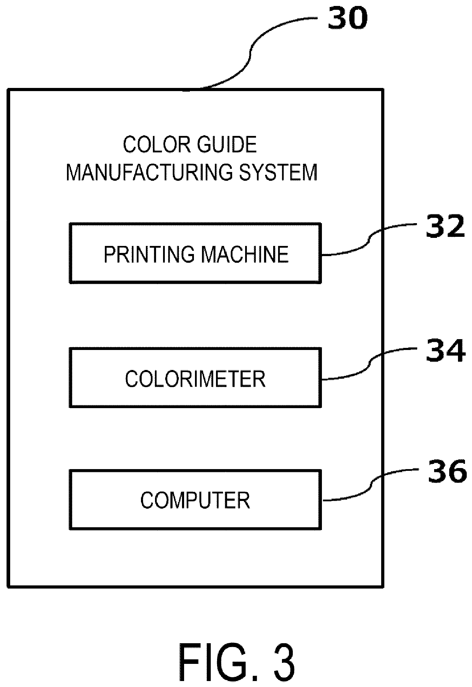

FIG. 3 illustrates an example of the color guide manufacturing system 30 according to the present embodiment. The color guide manufacturing system 30 may include a printer 32, a colorimeter 34, and a computer 36.

The printer 32 prints the ink colors of the printing machine 12 on a metal base material, and forms the plurality of color patches 14 of the color guide 16.

The printer 32 may be a printing process printer such as a gravure printer, a flexographic printer, or an offset printer that performs printing using printing plates. The printing machine 12 may be an inkjet printer.

The printer 32 may be a printer that performs printing using ink of process colors such as cyan (C), magenta (M), yellow (Y), and black (K) and/or special color ink other than the process colors.

The printer 32 may be the printer 32 of the same type as that of the printing machine 12. The printing machine 12 in the can printing system 10 may be used as the printer 32.

The printer 32 may be the printer 32 that uses a plate of the same plate material as that of the printing machine 12. When, for example, the printing machine 12 is a printer that uses a resin relief printing plate, the printer 32 may also be a printer that uses a resin relief printing plate.

The ink used by the printer 32 may be the same ink as the ink used by the printing machine 12, or may be ink that exhibits substantially the same color as the ink used by the printing machine 12. For example, the ink used by the printer 32

may be ink that contains an equivalent content of the same pigment and/or dye (e.g., a ratio of wt.% of a pigment and/or a dye to the solid content in the ink is within ± 20%) as those of the ink used by the printing machine 12. The ink used by the printer 32 more preferably contains the same or the same type (e.g., acrylates) of a binder resin as that of the ink used by the printing machine 12. When the printer 32 uses commercially available ink, it is more preferable to use ink of the same manufacturer and model number.

The colorimeter 34 subjects the plurality of color patches 14 formed by the printer 32 to color measurement to acquire color coordinates of the plurality of color patches 14 on the color space. As the color coordinates, values of the CIE1976Lab color specification system defined by JISZ8781-4: 2013 may be used, or values in the CIE1976Luv color specification system defined by JISZ8781-5: 2013 may be used.

The computer 36 generates image data for performing printing by printer 32 and provides the data to the printer 32. When the printer 32 is a printing process printer, the computer 36 may generate platemaking data for performing platemaking by the platemaking device, and provide the data to the platemaking device. Furthermore, the computer 36 may execute processing of storing the values of the color coordinates of the plurality of color patches 14 acquired by the colorimeter 34, and arranging the values of the color coordinates on the color space.

The computer 36 may arrange the values of the color coordinates of the color patches 14 on the color space such that the color coordinates of the one or more color patches 14 of the plurality of color patches 14 are arranged in all of the plurality of hue regions and the achromatic region, and the color coordinates of the one or more color patches 14 of the plurality of color patches 14 are arranged in half or more predetermined lightness/chroma regions of the plurality of lightness/chroma regions in each of the plurality of hue regions.

The color guide manufacturing system 30 according to the present embodiment can use as the color sample of the printing machine 12 the color guide 16 that uses the metal base material containing the same metal as that of the product of the metal can 22, and, consequently, even when the hues of the ink colors change due to, for example, surface gloss of the metal can 22, can provide the color guide 16 having a little color difference from the ink colors expressed on the product. Consequently, it is possible to accurately designate the ink colors expressed on the product of the metal can 22 on the basis of the color guide 16, and it is possible to reduce the number of times of correction at the time of calibration of printing in the can printing system 10 and omit calibration, so that it is possible to reduce the time taken until final proof of printing and a workload.

Furthermore, the color guide manufacturing system 30 according to the present embodiment can provide the color sample that has a less unbalanced hue, lightness, and chroma and covers the hue, the lightness, and the chroma.

Note that, although the present embodiment has described that the color guide manufacturing system 30 belongs to the can manufacturing system 100, the color guide manufacturing system 30 may be used as the color guide manufacturing system 30 for metal products other than metal cans. Furthermore, the color guide 16 may be used as a color sample of a metal product other than the metal can 22.

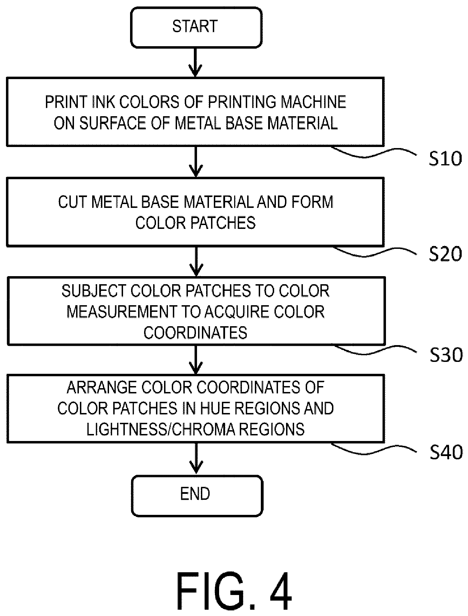

FIG. 4 illustrates an example of a flow of manufacturing the color guide 16 according to the present embodiment. The color guide 16 according to the present embodiment can be manufactured by a printing step of printing the ink colors of the printing machine 12 on the surface of the metal base material, and a color patch forming step of cutting the metal base material on which the ink colors of the printing machine 12 have been printed in the printing step and forming the color patches 14.

The color guide 16 according to the present embodiment may be manufactured by performing the processing in S10 to S40 in FIG. 4. Note that, although the processing in S10 to S40 will be described in order for convenience of description, at least part of the processing may be executed in parallel, or may be executed by rearranging the steps without departing from the gist of the present invention.

First, in S10, the ink colors of the printing machine 12 are printed on the surface of the metal base material. As for description of the metal base material, the above description can be applied as is.

In S10, the computer 36 may generate image data for printing the color patches 14 by the printer 32, and provide the image data to the printer 32. When the printer 32 is the printing process printing machine, the computer 36 may generate platemaking data for performing platemaking by the platemaking device on the basis of the image data, and supply the platemaking data to the platemaking device in S10.

The image data may be image data for forming a solid image or may be image data for forming a halftone image. The image data may be image data including symbols, signs, characters, numbers, or figures, or may be image data of a plain image. The image data may be image data including a single color or image data including a plurality of colors. For example, the image data may be image data including a single-color figure of a simple shape such as a square shape or a circular shape, or may be image data including a figure formed by arranging simple shapes of a plurality of different colors.

The printer 32 performs printing on the surface of the metal base material on the basis of the image data. For description of the printer 32 that performs printing on the metal base material in S10, the above description may be applied as is. When the printer 32 is the printing process printing machine, the printer 32 may print the color patches 14 using the plate on which the platemaking device has performed platemaking. The printer 32 finishes S10 and proceeds to S20.

Next, in S20, the metal base material on which the ink colors of the printing machine 12 have been printed in S10 is

cut to form the color patches 14. Although the shape and the size of the cut piece obtained by cutting the metal base material are not limited, the color patch 14 may be formed in a flat plate shape that forms a rectangular shape or a square shape whose one side is, for example, 2 to 7 cm. Note that, when the metal base material having been subjected to printing in S10 can be used as the color patches 14 without being cut, S20 may be omitted.

Next, in S30, the color coordinates of the colors of the color patches 14 on the color space are acquired. The color coordinates of the colors of the color patches 14 on the color space may be acquired subjecting the color patches 14 formed in S20 to color measurement. The color coordinates on the color space may be acquired using the colorimeter 34. As the color coordinates, the values of the CIE1976Lab color specification system defined by JISZ8781-4: 2013 may be used, or the values in the CIE1976Luv color specification system defined by JISZ8781-5: 2013 may be used.

Next, in S40, the values of the color coordinates of the color patches 14 acquired in S30 are arranged on the color space. Specific classification of the hue regions on the color space and the lightness/chroma regions in the hue regions, and the achromatic region and the lightness regions in the achromatic region, and specific arrangement of the color patches 14 in these regions will be described later.

According to the manufacturing flow of the color guide 16 illustrated in FIG. 4, the color guide 16 that uses the can body part 24 of the metal can 22 as the metal base material can be used as the color sample of the printing machine 12, so that, even when the hues of the ink colors change due to, for example, surface gloss of the metal can 22, it is possible to provide the color guide 16 having a little color difference from the ink colors expressed on the product.

Consequently, it is possible to accurately designate the ink colors expressed on the product of the metal can 22 on the basis of the color guide 16, and it is possible to reduce the number of times of correction at the time of calibration of printing in the can printing system 10 and omit calibration, so that it is possible to reduce the time taken until final proof of printing and a workload.

Furthermore, the manufacturing flow of the color guide 16 according to the present embodiment can provide the color sample that has a less unbalanced hue, lightness, and chroma and covers the hue, the lightness, and the chroma.

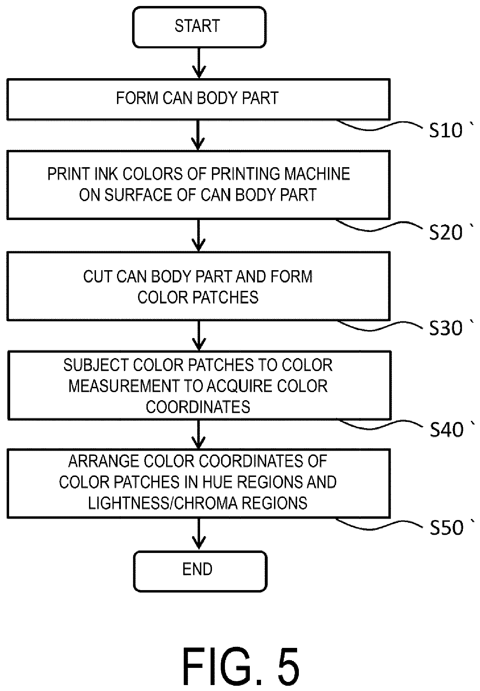

FIG. 5 illustrates an example of a flow of manufacturing the color guide 16 according to the present embodiment. FIG. 5 illustrates the example of the manufacturing flow in the case where the can body part 24 of the metal can 22 is used as a metal base material in the manufacturing flow in FIG. 4. The color guide 16 according to the present embodiment can be manufactured by a printing step of printing the ink colors of the printing machine 12 on the surface of the can body part 24, and a color patch forming step of cutting the can body part 24 on which the ink colors of the printing machine 12 have been printed in the printing step and forming the color patches 14.

The color guide 16 according to the present embodiment may be manufactured by performing processing in S10' to S50' in FIG. 5. Note that, although the processing in S10' to S50' will be described in order for convenience of description, at least part of the processing may be executed in parallel, or may be executed by rearranging the steps without departing from the gist of the present invention.

First, the can body part 24 is formed in S10'. The can body part 24 may be the can body part 24 formed of a metal base material containing the same metal as the metal can 22 subjected to printing by the printing machine 12. As for description of the metal base material, the above description can be applied as is. The can body part 24 may be the can body part 24 formed by the same processing as that performed on the metal can 22 subjected to printing by the printing machine 12. The can body part 24 may be formed by performing, for example, drawing/ironing processing on a metal plate. The can body part 24 may be manufactured by the can body manufacturing system 20.

Next, in S20', the ink colors of the printing machine 12 are printed on the surface of the can body part 24. In S20', the computer 36 may generate image data for printing the color patches 14 by the printer 32, and provide the image data to the printer 32. When the printer 32 is the printing process printing machine, the computer 36 may generate platemaking data for performing platemaking by the platemaking device on the basis of the image data, and supply the platemaking data to the platemaking device in S20'. For description of the image data, the above description may be applied as is.

The printer 32 performs printing on the surface of the can body part 24 on the basis of the image data. For description of the printer 32 that performs printing on the can body part 24 in S20', the above description may be applied as is. When the printer 32 is the printing process printing machine, the printer 32 may print the color patches 14 using the plate on which the platemaking device has performed platemaking. The printer 32 is preferably a printer of the same type as that of the printing machine 12. The printer 32 finishes S20' and proceeds to S30'.

Next, in S30', the can body part 24 on which the ink colors of the printing machine 12 have been printed in S20' is cut to form the color patches 14. Although the shape and the size of the cut piece obtained by cutting the can body part 24 are not limited, the color patch 14 may be formed in a flat plate shape that forms a rectangular shape or a square shape whose one side is, for example, 2 to 7 cm.

Next, in S40', the color coordinates of the colors of the color patches 14 on the color space are acquired. The color coordinates of the colors of the color patches 14 on the color space may be acquired by subjecting the color patches 14 formed in S30' to color measurement. The color coordinates on the color space may be acquired using the colorimeter 34. For description of the color coordinates, the above description may be applied as is.

In S40', the color coordinates of the color patches 14 may be acquired by subjecting a printed material that

exhibits substantially the same colors to color measurement, instead of subjecting the color patches 14 to color measurement. By, for example, subjecting the printed material obtained by printing ink that is the same as the ink used by the printer 32 or exhibits substantially the same color on a metal plate containing the same metal base material as that of the can body part 24 to color measurement, the color coordinates of the color patches may be acquired.

Next, in S50', values of the color coordinates of the color patches 14 acquired in S40' are arranged on the color space. Specific classification of the hue regions on the color space and the lightness/chroma regions in the hue regions, and the achromatic region and the lightness regions in the achromatic region, and specific arrangement of the color patches 14 in these regions will be described later.

According to the manufacturing flow of the color guide 16 illustrated in FIG. 5, the color guide 16 that uses the can body part 24 of the metal can 22 as the metal base material can be used as the color sample of the printing machine 12, so that, even when the hues of the ink colors change due to, for example, surface gloss of the metal can 22, it is possible to provide the color guide 16 having a little color difference from the ink colors expressed on the product. Furthermore, according to the manufacturing flow of the color guide 16 illustrated in FIG. 5, it is possible to provide the color guide 16 having a little color difference from the ink colors expressed on the product even when gloss or the hue of the surface of a can body changes due to, for example, the drawing/ironing processing of the metal can 22.

Consequently, it is possible to accurately designate the ink colors expressed on the product of the metal can 22 on the basis of the color guide 16, and it is possible to reduce the number of times of correction at the time of calibration of printing in the can printing system 10 and omit calibration, so that it is possible to reduce the time taken until final proof of printing and a workload.

Furthermore, the manufacturing flow of the color guide 16 according to the present embodiment can provide the color sample that has a less unbalanced hue, lightness, and chroma and covers the hue, the lightness, and the chroma.

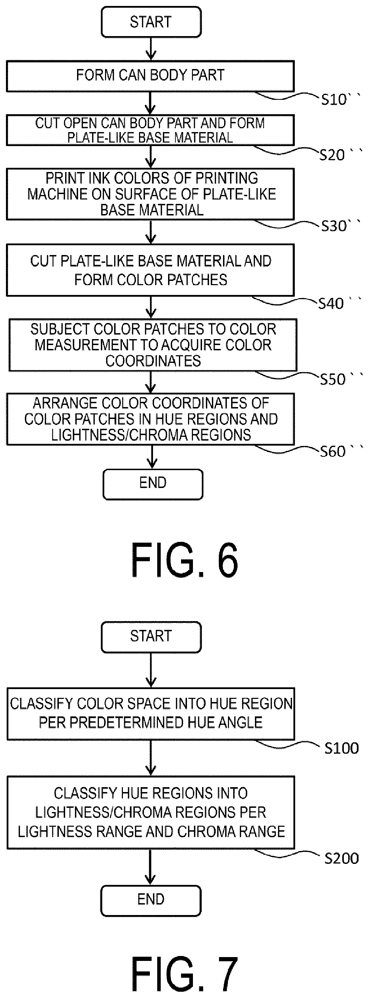

FIG. 6 illustrates an example of a flow of manufacturing the color guide 16 according to the present embodiment. FIG. 6 illustrates another example of the manufacturing flow in the case where the can body part 24 of the metal can 22 is used as the metal base material in the manufacturing flow in FIG. 4. The color guide 16 according to the present embodiment can be manufactured by a plate-like base material forming step of cutting open the can body part 24, and forming a plate-like base material; a printing step of printing the ink colors of the printing machine 12 on the surface of the plate-like base material; and a color patch forming step of cutting the plate-like material on which the ink colors of the printing machine 12 have been printed in the printing step and forming the color patches 14.

The color guide 16 according to the present embodiment may be manufactured by performing processing in S10" to S60" in FIG. 6. Note that, although the processing in S10" to S60" will be described in order for convenience of description, at least part of the processing may be executed in parallel, or may be executed by rearranging the steps without departing from the gist of the present invention.

First, the can body part 24 is formed in S10". The can body part 24 may be the can body part 24 formed of a metal base material containing the same metal as the metal can 22 subjected to printing by the printing machine 12. As for description of the metal base material, the above description can be applied as is. The can body part 24 may be the can body part 24 formed by the same processing as that performed on the metal can 22 subjected to printing by the printing machine 12. The can body part 24 may be formed by performing, for example, drawing/ironing processing on a metal plate. The can body part 24 may be manufactured by the can body manufacturing system 20.

Next, in S20", the can body part 24 is cut open to form the plate-like base material. The plate-like substrate may be formed in a flat plate shape.

Next, in S30", the ink colors of the printing machine 12 are printed on the surface of the plate-like base material. In S30", the computer 36 may generate and image data for printing the color patches 14 by the printer 32, and supply the image data to the printer 32. When the printer 32 is the printing process printing machine, the computer 36 may generate platemaking data for performing platemaking by the platemaking device on the basis of the image data, and supply the platemaking data to the platemaking device in S30". For description of the image data, the above description may be applied as is.

The printer 32 performs printing on the surface of the plate-like base material on the basis of the image data. For description of the printer 32 that performs printing on the can body part 24 in S30", the above description may be applied as is. When the printer 32 is the printing process printing machine, the printer 32 may print the color patches 14 using the plate on which the platemaking device has performed platemaking. The printer 32 finishes S30" and proceeds to S40".

Next, in S40", the plate-like base material on which the ink colors of the printing machine 12 have been printed in S30" is cut to form the color patches 14. Although the shape and the size of the cut piece obtained by cutting the plate-like base material are not limited, the color patch 14 may be formed in a flat plate shape that forms a rectangular shape or a square shape whose one side is, for example, 2 to 7 cm.

Next, in S50", the color coordinates of the colors of the color patches 14 on the color space are acquired. The color coordinates of the colors of the color patches 14 on the color space may be acquired by subjecting the color patches 14 formed in S40" to color measurement. For description of the color coordinates, the above description may be applied as is.

In S50", the color coordinates of the color patch 14 may be acquired by subjecting a printed material that exhibits

substantially the same colors to color measurement, instead of subjecting the color patches 14 to color measurement. For description of the printed material, the above description may be applied as is.

Next, in S60", values of the color coordinates of the color patches 14 acquired in S50" are arranged on the color space. Specific classification of the hue regions on the color space and the lightness/chroma regions in the hue regions, and the achromatic region and the lightness regions in the achromatic region, and specific arrangement of the color patches 14 in these regions will be described later.

According to the manufacturing flow of the color guide 16 illustrated in FIG. 6, the color guide 16 that uses the can body part 24 of the metal can 22 as the metal base material can be used as the color sample of the printing machine 12, so that, even when the hues of the ink colors change due to, for example, surface gloss of the metal can 22, it is possible to provide the color guide 16 having a little color difference from the ink colors expressed on the product. Furthermore, according to the manufacturing flow of the color guide 16 illustrated in FIG. 6, it is possible to provide the color guide 16 having a little color difference from the ink colors expressed on the product even when gloss or the hue of the surface of a can body changes due to, for example, the drawing/ironing processing of the metal can 22.

Consequently, it is possible to accurately designate the ink colors expressed on the product of the metal can 22 on the basis of the color guide 16, and it is possible to reduce the number of times of correction at the time of calibration of printing in the can printing system 10 and omit calibration, so that it is possible to reduce the time taken until final proof of printing and a workload.

Furthermore, the manufacturing flow of the color guide 16 according to the present embodiment can provide the color sample that has a less unbalanced hue, lightness, and chroma and covers the hue, the lightness, and the chroma.

FIG. 7 illustrates an example of a flow of classifying the color space into a plurality of hue regions and classifying the plurality of hue regions into a plurality of lightness/chroma regions according to the present embodiment.

First, in S100, the color space is classified into (1) the plurality of hue regions classified per predetermined hue angle and (2) an achromatic region whose value of the chroma C* is 2.0 or less. The hue angle may be a hue angle h° defined by $h° = \tan^{-1}(b^*/a^*)$ when the color coordinates are expressed by the CIE1976Lab color specification system defined by JISZ8781-4: 2013. Note that, in the CIE1976Lab color specification system defined by JISZ8781-4: 2013, the lightness is represented by L*, and chromaticity indicating the hue and the chroma is represented by a* and b*. Note that the chroma C* is defined by $C^* = [(a^*)^2+(b^*)^2]^{1/2}$.

In S100, the hue regions may be classified as shown in, for example, Table 1 below.

[Table 1]

| HUE | CLASSIFICATION OF HUE REGION |
|---|---|
| R (RED) | 10° ≦ h° < 40° |
| YR (YELLOWISH RED) | 40° ≦ h° < 75° |
| Y (YELLOW) | 75° ≦ h° < 105° |
| GY (YELLOWISH GREEN) | 105° ≦ h° < 140° |
| G (GREEN) | 140° ≦ h° < 180° |
| BG (BLUISH GREEN) | 180° ≦ h° < 215° |
| B (BLUE) | 215° ≦ h° < 255° |
| PB (BLUISH PURPLE) | 255° ≦ h° < 295° |
| P (PURPLE) | 295° ≦ h° < 330° |
| RP (REDDISH PURPLE) | 330° ≦ h° < 10° |

In Table 1, the "hue" indicates a hue visually recognized on the basis of the color patch 14 having color coordinates classified into each hue region. For example, the color patch 14 arranged in a hue region of 10° ≤ h° < 40 appears to have a red hue to human eyes.

In S100, in addition to the classification based on the hue angle h°, the color space may be separately classified as an achromatic region (N) whose value of the chroma C* is C* ≤ 2.0.

In S100, the classified hue regions shown in Table 1 may be further classified into a plurality of hue regions every 5° to 20°. For example, the plurality of hue regions may be classified as shown in Table 2.

[Table 2]

| HUE | CLASSIFICATION OF HUE REGION |
|---|---|
| R-1 | 10° ≦ h° < 20° |
| R-2 | 20° ≦ h° < 30° |
| R-3 | 30° ≦ h° < 40° |
| YR-1 | 40° ≦ h° < 50° |
| YR-2 | 50° ≦ h° < 60° |
| YR-3 | 60° ≦ h° < 75° |
| Y-1 | 75° ≦ h° < 90° |
| Y-2 | 90° ≦ h° < 105° |
| GY-1 | 105° ≦ h° < 120° |
| GY-2 | 120° ≦ h° < 135° |
| GY-3 | 135° ≦ h° < 140° |
| G-1 | 140° ≦ h° < 155° |
| G-2 | 155° ≦ h° < 170° |
| G-3 | 170° ≦ h° < 180° |
| BG-1 | 180° ≦ h° < 190° |
| BG-2 | 190° ≦ h° < 200° |
| BG-3 | 200° ≦ h° < 215° |
| B-1 | 215° ≦ h° < 235° |
| B-2 | 235° ≦ h° < 255° |
| PB-1 | 255° ≦ h° < 265° |
| PB-2 | 265° ≦ h° < 285° |
| PB-3 | 285° ≦ h° < 295° |
| P-1 | 295° ≦ h° < 305° |
| P-2 | 305° ≦ h° < 315° |
| P-3 | 315° ≦ h° < 330° |
| RP-1 | 330° ≦ h° < 350° |
| RP-2 | 350° ≦ h° < 360° |
| RP-3 | 360° ≦ h° < 10° |

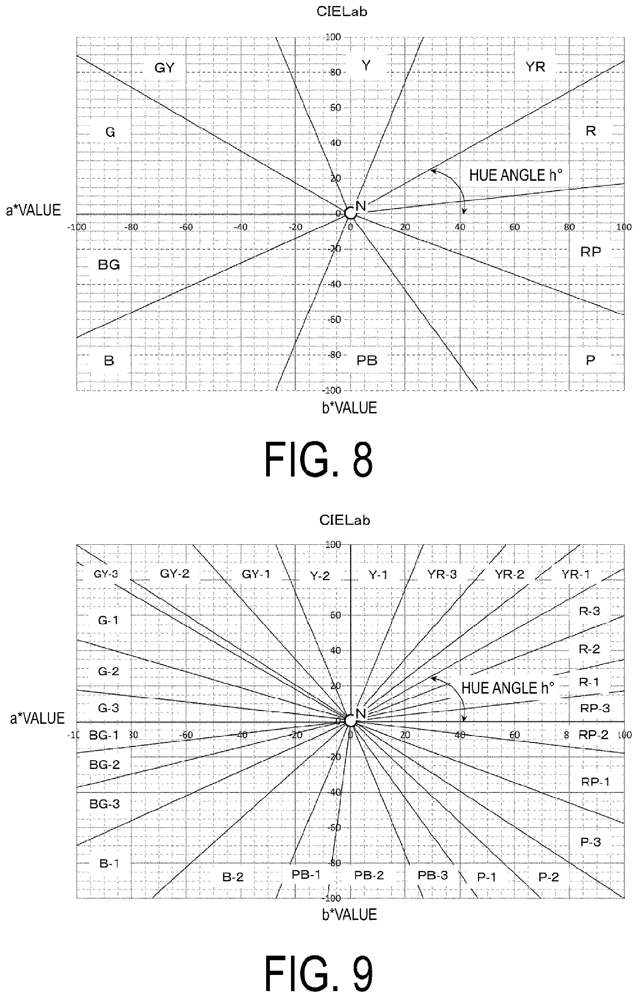

FIGS. 8 and 9 illustrate examples of the plurality of hue regions and the achromatic region according to the present embodiment. FIG. 8 illustrates classification of the hue regions shown in Table 1 and the achromatic region on an a*b* plane of the color space. Furthermore, FIG. 9 illustrates the classification of the hue regions shown in Table 2 and the achromatic region on the a*b* plane of the color space.

Next, in S200, (3) each of the plurality of hue regions classified in S100 is classified into a plurality of lightness/chroma regions classified by a plurality of lightness classifications and a plurality of chroma classifications,

and (4) the achromatic region is classified into a plurality of lightness classifications classified by a plurality of lightness classifications. Here, the plurality of hue regions classified into the plurality of lightness/chroma regions in S200 may be the plurality of hue regions shown in Table 1, yet are preferably the plurality of hue regions shown in Table 2.

The plurality of lightness classifications may be a plurality of lightness classifications obtained by classifying values of the lightness L* every 10 to 30. The plurality of chroma classifications may be a plurality of chroma classifications obtained by classifying values of chroma C* every 20 to 40.

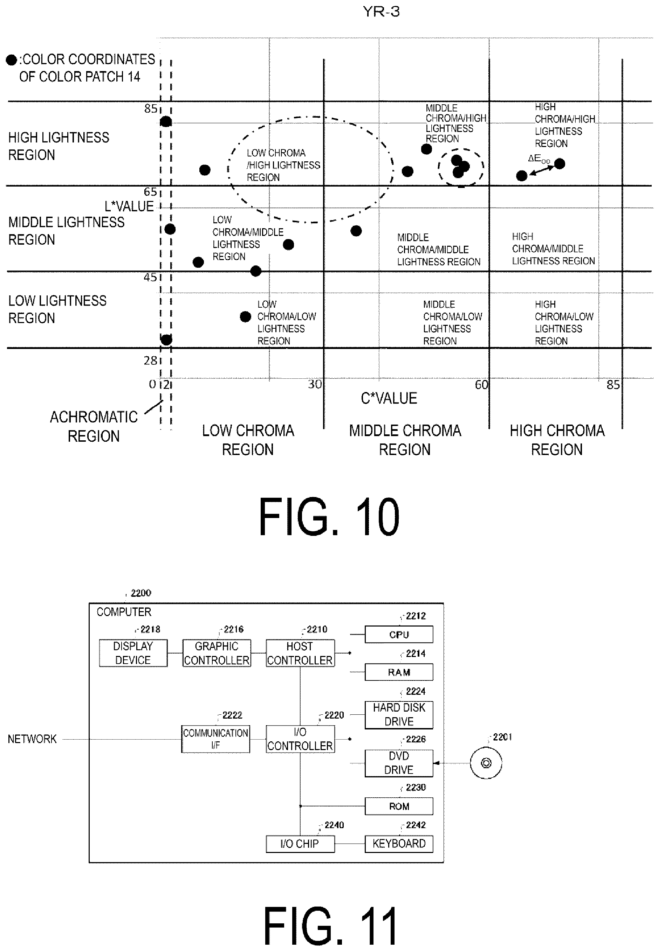

FIG. 10 illustrates an example of a plurality of lightness/chroma regions in the hue regions and the lightness regions in the achromatic region according to the present embodiment. The plurality of lightness classifications may be lightness classifications obtained by classifying the values of the lightness L* into $28 \leq L^* < 45$ (low lightness region), $45 \leq L^* < 65$ (middle lightness region), and $65 \leq L^* < 85$ (high lightness region).

The plurality of chroma classifications may be chroma classifications obtained by classifying the values of the chroma C* into $0 \leq C^* < 30$ (low chroma region), $30 \leq C^* < 60$ (middle chroma region), and $60 \leq C^* < 85$ (high chroma region).

As illustrated in FIG. 10, the plurality of (nine) lightness/chroma regions in the hue region may be classified into a low lightness/low chroma region, a middle lightness/low chroma region, a high lightness/low chroma region, a low lightness/middle chroma region, a middle lightness/middle chroma region, a high lightness/middle chroma region, a low lightness/high chroma region, a middle lightness/high chroma region, and a high lightness/high chroma region.

When the color space is further classified into the achromatic region, the achromatic region may be classified into a plurality of lightness regions. The plurality of lightness regions may be classified into the low lightness region, the middle lightness region, and the high lightness region.

In S40 in FIG. 4, S50' in FIG. 5, and S60" in FIG. 6, a method for arranging the color coordinates of the color patches 14 in the plurality of hue regions and the achromatic region, and arranging the color coordinates of the color patches 14 in the lightness/chroma regions in the hue regions and the lightness regions in the achromatic region will be more specifically described below.

In S40 in FIG. 4, S50' in FIG. 5, and S60" in FIG. 6, the color coordinates of the one or more color patches 14 of the plurality of color patches 14 are arranged in all of the plurality of hue regions and the achromatic region classified as shown in above Table 1 or Table 2. Furthermore, the color coordinates of the one or more color patches 14 of the plurality of color patches 14 are arranged in half or more predetermined lightness/chroma regions of the plurality of lightness/chroma regions in each hue region.

First, in S40 in FIG. 4, S50' in FIG. 5, and S60" in FIG. 6, the computer 36 disposes the color coordinates obtained by subjecting the color patches 14 in each hue region and the achromatic region to color measurement. More specifically, for example, the value of (a*, b*) of the color coordinates of each color patch 14 may be plotted on the a*b* plane of the color space as illustrated in FIG. 8 or 9, and arranged in each hue region and the achromatic region.

The computer 36 arranges the color coordinates of the color patches 14 on the color space, and manufactures the color guide 16 such that the color coordinates of the one or more color patches 14 are arranged in all of the hue regions and the achromatic region shown in Table 1 or 2. The number of the color patches 14 to be arranged in each hue region and the achromatic region is not limited, yet may be five or more, 10 or more, or 20 or more. The number of color patches to be arranged in each hue region and the achromatic region may be 100 or less, 70 or less, or 50 or less.

When the color coordinates of the color patches 14 are arranged in each hue region and the achromatic region, the color patches 14 may be visually checked to adjust regions for arranging the color patches 14. When, for example, the plurality of color patches 14 having approximate values of the color coordinates are visually checked and visually recognized as the same hue, and even when these color patches 14 are arranged in different regions according to numerical values of the color coordinates, the color patches 14 may be arranged in the same region.

Next, the computer 36 arranges the color coordinates of the color patches 14 in the plurality of lightness/chroma regions in each of the plurality of hue regions and the plurality of lightness regions in the achromatic region. For example, the values of the color coordinates (L*, a*, b*) of each color patch 14 may be plotted and arranged on the C*L* plane of the color space as illustrated in FIG. 10.

The computer 36 arranges the color coordinates of the color patches 14 such that the color coordinates of the one or more color patches 14 are arranged in predetermined lightness/chroma regions among the plurality of lightness/chroma regions in each hue region.

In each hue region, the lightness/chroma regions in which the color coordinates of the color patches 14 are arranged may be the half or more of predetermined lightness/chroma regions of the plurality of lightness/chroma regions. The lightness/chroma regions in which the color coordinates of the color patches 14 are arranged may be lightness/-chroma regions including the color coordinates of colors that can be visually perceived by people among the plurality of lightness/chroma regions. The lightness/chroma regions in which the color coordinates of the color patches 14 are arranged may be all lightness/chroma regions of the lightness/chroma regions including the color coordinates of the colors that can be visually perceived by people, or may be 90% or more, 80% or more, or 70% or more of lightness/chroma regions of the lightness/chroma regions including the colors that can be visually perceived by people.

FIG. 10 illustrates an example where the color patch 14 of "YR-3" of the hue regions in Table 2 is arranged in the

lightness/chroma region. As for the plurality of color patches 14, the color coordinates of the one or more color patches 14 may be arranged in each of six regions of the low lightness/low chroma region, the middle lightness/low chroma region, the high lightness/low chroma region, the middle lightness/middle chroma region, the high lightness/middle chroma region, and the high lightness/high chroma region among nine lightness/chroma regions in this hue region.

Furthermore, the computer 36 arranges the color coordinates of the color patches 14 such that the color coordinates of the one or more color patches 14 are arranged in predetermined lightness regions of the plurality of lightness regions in the achromatic region.

In the achromatic region, the lightness regions in which the color coordinates of the color patches 14 are arranged may be lightness regions including the color coordinates of the colors that can be visually perceived by people among the plurality of lightness regions. The lightness regions in which the color coordinates of the color patches 14 are arranged may be all lightness/chroma regions of the lightness regions including the color coordinates of the colors that can be visually perceived by people.

FIG. 10 illustrates an example where the color patches 14 are arranged in the lightness regions in the achromatic region. In FIG. 10, a region sandwiched between two dotted lines indicates the achromatic region. As for the plurality of color patches 14, the color coordinates of the one or more color patches 14 may be arranged in each of the low lightness region, the middle lightness region, and the high lightness region of the plurality of lightness regions in the achromatic region.

Tables 3A and 3B show specific examples where the color coordinates of the color patches 14 are arranged in each of the plurality of hue regions and the achromatic region shown in Table 2.

[Table 3A]

| CHRHOMA CLASSIFICATION | LOW | | | MIDDLE | | | HIGH | | |
|---|---|---|---|---|---|---|---|---|---|
| LIGHTNESS CLASSIFICATION | LOW | MIDDLE | HIGH | LOW | MIDDLE | HIGH | LOW | MIDDLE | HIGH |
| R－1 | ○ | ○ | ○ | ○ | ○ | ○ | | ○ | |
| R－2 | ○ | ○ | ○ | ○ | ○ | ○ | | ○ | |
| R－3 | ○ | ○ | ○ | ○ | ○ | ○ | | ○ | |
| YR－1 | ○ | ○ | ○ | ○ | ○ | ○ | | ○ | ○ |
| YR－2 | ○ | ○ | ○ | ○ | ○ | ○ | | ○ | ○ |
| YR－3 | ○ | ○ | ○ | | ○ | ○ | | | ○ |
| Y－1 | ○ | ○ | ○ | | ○ | ○ | | | ○ |
| Y－2 | ○ | ○ | ○ | | ○ | ○ | | | ○ |
| GY－1 | ○ | ○ | ○ | | ○ | ○ | | ○ | ○ |
| GY－2 | ○ | ○ | ○ | | ○ | ○ | | ○ | ○ |
| GY－3 | ○ | ○ | ○ | | ○ | ○ | | ○ | ○ |
| G－1 | ○ | ○ | ○ | | ○ | ○ | | ○ | ○ |
| G－2 | ○ | ○ | ○ | | ○ | ○ | | ○ | ○ |
| G－3 | ○ | ○ | ○ | ○ | ○ | ○ | | ○ | ○ |
| BG－1 | ○ | ○ | ○ | ○ | ○ | ○ | | | |
| BG－2 | ○ | ○ | ○ | ○ | ○ | ○ | | ○ | |
| BG－3 | ○ | ○ | ○ | | ○ | ○ | | | |
| B－1 | ○ | ○ | ○ | ○ | ○ | ○ | | | |
| B－2 | ○ | ○ | ○ | ○ | ○ | ○ | | | |
| PB－1 | ○ | ○ | ○ | ○ | ○ | ○ | | | |
| PB－2 | ○ | ○ | ○ | ○ | ○ | ○ | | ○ | |
| PB－3 | ○ | ○ | ○ | ○ | ○ | | | | |
| P－1 | ○ | ○ | ○ | ○ | ○ | | ○ | | |
| P－2 | ○ | ○ | ○ | ○ | ○ | ○ | ○ | | |
| P－3 | ○ | ○ | ○ | ○ | ○ | ○ | | ○ | |
| RP－1 | ○ | ○ | ○ | ○ | ○ | ○ | | ○ | |
| RP－2 | ○ | ○ | ○ | ○ | ○ | ○ | | ○ | |
| RP－3 | ○ | ○ | ○ | ○ | ○ | ○ | | ○ | |

[Table 3B]

| CHROMA | $C^* \leq 2.0$ | | |
|---|---|---|---|
| LIGHTNESS CLASSIFICATION | LOW | MIDDLE | HIGH |
| N (ACHROMATIC REGION) | ○ | ○ | ○ |

In Tables 3A and 3B, "low", "middle", and "high" shown in the column of lightness classification mean the "low lightness region", the "middle lightness region", and the "high lightness region" in the plurality of lightness/chroma regions illustrated in FIG. 10, respectively, and "low", "middle", and "high" illustrated in the column of chroma classification mean the "low chroma region", the "middle chroma region", and the "high chroma region", respectively. Furthermore, "○" in the tables means a region in which one or a plurality of color coordinates of the color patches 14 are arranged.

The computer 36 may arrange the plurality of color patches 14 such that a minimum value of the color difference between each color patch 14 included in the plurality of color patches 14 and the other color patches 14 included in the plurality of color patches 14 is $2 \leq \Delta E_{00} \leq 9$. $\Delta E_{00}$ is an indicator of the color difference defined by JISZ8781-6: 2017 and ISO/CIE 11664-6: 2014(E). The value of $\Delta E_{00}$ may be $5 \leq \Delta E_{00} \leq 9$ or $7 \leq \Delta E_{00} \leq 9$.

By arranging the color coordinates of the color patches 14 such that the minimum value $\Delta E_{00}$ of the color differences between the color patches 14 included in the color guide 16 falls within the above range, the printing machine 12 can perform printing that expresses the colors of the color patches 14 with high reproducibility.

By arranging the color coordinates of the plurality of color patches 14 on the color space, it is possible to easily grasp the hue, the lightness, and the chroma of the colors covered by the color patches 14 included in the color guide 16.

It is understood from, for example, FIG. 10 that the color coordinates (indicated by black circles in FIG. 10) of the color patches 14 are not arranged in a region surrounded by a dashed dotted line. In such a case, the color patches 14 may be added such that the color guide 16 includes the color patches 14 arranged in the region surrounded by the dashed dotted line. Furthermore, it is understood that the color patches 14 are densely arranged in a region surrounded by a broken line on the color space. In such a case, the color guide 16 may not include any of the color patches 14 arranged in the region surrounded by the broken line.

The color guide 16 may include the plurality of color patches 14 having the colors of the color coordinates arranged on the color space in S40 in FIG. 4, S50' in FIG. 5, and S60" in FIG. 6. Consequently, the plurality of color patches 14 included in the color guide 16 have a less unbalanced hue, lightness, and chroma and cover the hue, the lightness, and the chroma.

Various embodiments of the present invention may be described with reference to the flow charts and the block diagrams. Here, the blocks may represent (1) a stage of a process of executing an operation or (2) a section of a device that plays a role of executing the operation. Specific stages and sections may be implemented by a dedicated circuit, a programmable circuit that is supplied with computer-readable instructions stored on a computer-readable medium, and/or a processor that is supplied with computer-readable instructions stored on the computer-readable medium. The dedicated circuit may include a digital and/or analog hardware circuit, and may include an Integrated Circuit (IC) and/or a discrete circuit. The programmable circuits may include reconfigurable hardware circuits including logical AND, logical OR, logical XOR, logical NAND, logical NOR, and other logical operations, and memory elements such as flip-flops, registers, Field-Programmable Gate Arrays (FPGAs), and Programmable Logic Arrays (PLAs).

The computer-readable medium may include an arbitrary tangible device that can store instructions to be executed by a suitable device, and, as a result, the computer-readable medium including the instructions stored thereon include a product including instructions that can be executed to create means for executing operations designated in the flow charts or the block diagrams. Examples of the computer-readable medium may include electronic storage media, magnetic storage media, optical storage media, electromagnetic storage media, and semiconductor storage media. More specific examples of the computer-readable medium may include a floppy (registered trademark) disk, a diskette, a hard disk, a Random Access Memory (RAM), a Read-Only Memory (ROM), an Erasable Programmable Read-Only Memory (an EPROM or a flash memory), an Electrically Erasable Programmable Read-Only Memory (EEPROM), a Static Random Access Memory (SRAM), a Compact Disc Read-Only Memory (CD-ROM), a Digital Versatile Disc (DVD), a Blu-ray (RTM) disc, a memory stick, and an integrated circuit card.

The computer-readable instructions may include either a source code or an object code described by any combination of one or a plurality of programming languages including assembler instructions, Instruction Set Architecture (ISA) instructions, machine instructions, machine-dependent instructions, microcode, firmware instructions, and state setting data, or an object-oriented programming language such as Smalltalk (registered trademark), JAVA (registered trademark), and C++, and conventional procedural programming languages such as the "C" programming language or similar programming languages.

The computer-readable instructions may be provided to a processor or a programmable circuit of a general-purpose computer, a special purpose computer, or other programmable data processing devices locally or via a Local Area Network (LAN) or a Wide Area Network (WAN) such as the Internet to execute the computer-readable instructions to create means for executing the operations designated in the flow charts or the block diagrams. Examples of the processor include computer processors, processing units, microprocessors, digital signal processors, controllers, and microcontrollers.

FIG. 11 illustrates an example of a computer 2200 where a plurality of aspects of the present invention may be entirely or partially embodied. Programs installed in the computer 2200 may cause the computer 2200 to function as an operation associated with the device according to the embodiment of the present invention or one or a plurality of sections of the device, or execute the operation or the one or plurality of sections, and/or cause the computer 2200 to execute a process or stages of the process according to the embodiment of the present invention. Such programs may be executed by a CPU 2212 to cause the computer 2200 to execute specific operations associated with some or all of the flow charts and the blocks of block diagrams described herein.

The computer 2200 according to the present embodiment includes the CPU 2212, a RAM 2214, a graphic

controller 2216, and a display device 2218 that are connected with each other via a host controller 2210. The computer 2200 also includes input/output units such as a communication interface 2222, a hard disk drive 2224, a DVD-ROM drive 2226, and an IC card drive that are connected to the host controller 2210 via an input/output controller 2220. The computer also includes legacy input/output units such as a ROM 2230 and a keyboard 2242 that are connected to the I/O controller 2220 via an input/output chip 2240.

The CPU 2212 operates in accordance with programs stored in the ROM 2230 and the RAM 2214, and thereby controls each unit. The graphic controller 2216 acquires image data generated by the CPU 2212 in, for example, a frame buffer provided in the RAM 2214 or the graphic controller 2216 itself, and causes the display device 2218 to display the image data thereon.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201, and provides the program or the data to the hard disk drive 2224 via the RAM 2214. The IC card drive reads a program and data from the IC card and/or writes the program and the data in the IC card.

The ROM 2230 has stored therein, for example, a boot program that is executed by the computer 2200 at a time of activation and/or programs that are dependent on hardware of the computer 2200. The input/output chip 2240 may also connect various input/output units to the input/output controller 2220 via a parallel port, a serial port, a keyboard port, and a mouse port.

The programs are provided by computer-readable media such as the DVD-ROM 2201 or the IC card. The programs are read from the computer-readable media, installed in the hard disk drive 2224, the RAM 2214, or the ROM 2230 that are also examples of the computer-readable media, and executed by the CPU 2212. Information processing described in these programs is read by the computer 2200 and causes the programs and the various types of above-described hardware resources to work together. A device or a method may be configured by operating or processing information according to use of the computer 2200.

When, for example, communication is executed between the computer 2200 and an external device, the CPU 2212 may execute a communication program loaded to the RAM 2214 and instruct the communication interface 2222 to perform communication processing on the basis of processing described in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network to, for example, a reception buffer processing region provided on the recording medium.

Furthermore, the CPU 2212 may cause the RAM 2214 to read all or necessary portions of files or a database stored in external recording media such as the hard disk drive 2224, the DVD-ROM drive 2226 (DVD-ROM 2201), and the IC card, and perform various types of processing on data on the RAM 2214. The CPU 2212 then writes the processed data back to the external recording media.

Various types of information such as various types of programs, data, tables, and databases may be stored in the recording medium and subjected to information processing. The CPU 2212 may perform, on the data read from the RAM 2214, various types of processing including various types of operations, information processing, conditional decision, conditional branches, unconditional branches, and information retrieval/replacement described throughout the present disclosure and designated by instruction sequences of the programs, and writes back the result to the RAM 2214. Furthermore, the CPU 2212 may also search for information in, for example, files in the storage media and databases. If, for example, a plurality of entries each having an attribute value of a first attribute associated with an attribute value of a second attribute are stored in the recording media, the CPU 2212 may search from the plurality of entries an entry for which the attribute value of the first attribute is designated and that matches with the condition, read the attribute value of the second attribute stored in the entry, and thereby acquire the attribute value of the second attribute associated with the first attribute that satisfies a predetermined condition.

The above-described programs or software modules may be stored on a computer-readable medium on the computer 2200 or near the computer 2200. Furthermore, a recording medium such as a hard disk or a RAM provided in a server system connected to a dedicated communication network or the Internet can be used as a computer-readable medium, and thereby provides the program to the computer 2200 via the network.

Although the present invention has been described above using the embodiment, the technical scope of the present invention is not limited to the scope described in the above embodiment. It is clear to those skilled in the art that the above-described embodiment can be variously changed or modified. It is clear from the recitation of the claims that the variously changed or modified embodiments are also included in the technical scope of the present invention.

It should be noted that the order of execution of each processing such as the operations, the procedures, the steps, and the stages of the device, the system, the programs, and the methods described and illustrated in the claims, the description, and the drawings is not explicitly described using words such as "before" and "prior to", and may be implemented in any order unless an output of previous processing is used for subsequent processing. Even if the operation flows in the claims, the specification, and the drawings are described using words such as "first" and "next" for

convenience of description, this does not mean that it is essential to perform the operations in this order.

Reference Signs List

10 Can printing system
12 Printing machine
14 Color patch
16 Color guide
18 Computer
20 Can body manufacturing system
22 Metal can
24 Can body part
30 Color guide manufacturing system
32 Printer
34 Colorimeter
36 Computer
100 Can manufacturing system
2200 Computer
2201 DVD-ROM
2210 Host controller
2212 CPU
2214 RAM
2216 Graphic controller
2218 Display device
2220 Input/output controller
2222 Communication interface
2224 Hard disk drive
2226 DVD-ROM drive
2230 ROM
2240 Input/output chip
2242 Keyboard

## Claims

**1.** A can printing system (10) comprising:

a printing machine (12) that performs printing on a surface of a metal can;
a color guide (16) that includes a plurality of color patches (14) obtained by printing an ink color of the printing machine (12) on a metal base material containing a metal identical to that of the metal can;
an inkjet printer that reproduces an ink color selected from the plurality of color patches and performs printing for calibration to a surface of a can for calibration of the printing machine (12) in such a way that a color difference between an ink color selected from the plurality of color patches (14) and an ink color expressed by printing for calibration falls within a predetermined range of a color difference; and
a computer (18) that generates data for performing printing by the inkjet printer and provides the data to the inkjet printer.

**2.** The can printing system (10) according to claim 1, wherein the plurality of color patches (14) include color patches obtained by printing the ink color of the printing machine (12) on the metal base material by a printer of a type identical to that of the printing machine (12), and/or
wherein the plurality of color patches (14) include a color patch obtained by printing the ink color of the printing machine (12) on the metal base material using ink containing a pigment and/or dye identical to that of ink of the printing machine (12).

**3.** The can printing system (10) according to any one of the preceding claims, wherein

when the plurality of color patches (14) of the color guide (16) are subjected to color measurement to acquire color coordinates of the plurality of color patches (14) on a color space,
a plurality of hue regions are obtained by segmenting the color space at predetermined hue angles, and a plurality of lightness/chroma regions are obtained by segmenting each of the plurality of hue regions at predetermined lightness widths and predetermined chroma widths,
color coordinates of one or more color patches of the plurality of color patches (14) are disposed in all of the plurality of hue regions, and
color coordinates of one or more color patches of the plurality of color patches (14) are disposed in predetermined lightness/chroma regions accounting for half or more of the plurality of lightness/chroma regions,
optionally wherein the plurality of hue regions include regions obtained by classifying values of a hue angle h° every 5° to 20°.

**4.** The can printing system (10) according to claim 3, wherein the plurality of hue regions include regions obtained by classifying values of a hue angle h° into 10° ≤ h°< 20°, 20° ≤ h°< 30°, 30° ≤ h°< 40°, 40° ≤ h°< 50°, 50° ≤ h°< 60°, 60° ≤ h °< 75°, 75° ≤ h°< 90°, 90° ≤ h°< 105°, 105° ≤ h°< 120°, 120° ≤ h°< 135°, 135° ≤ h°< 140°, 140° ≤ h°< 155°, 155° ≤ h°< 170°, 170° ≤ h°< 180°, 180° ≤ h°< 190°, 190° ≤ h°< 200°, 200° ≤ h°< 215°, 215° ≤ h°< 235°, 235° ≤ h°< 255°, 255° ≤ h°< 265°, 265° ≤ h°< 285°, 285° ≤ h°< 295°, 295° ≤ h°< 305°, 305° ≤ h°< 315°, 315° ≤ h°< 330°, 330° ≤ h°< 350°, 350° ≤ h°< 360°, and 360° ≤ h°< 10°.

**5.** The can printing system (10) according to claim 3 or 4, wherein the plurality of lightness/chroma regions include a plurality of lightness/chroma regions classified by a plurality of lightness classifications obtained by classifying values of lightness L* every 10 to 30 and a plurality of chroma classifications obtained by classifying values of chroma C* every 20 to 40 in each of the plurality of hue regions.

**6.** The can printing system (10) according to any one of claims 3 to 5, wherein the plurality of lightness/chroma regions include nine lightness/chroma regions classified by lightness classifications obtained by classifying values of lightness L* into 28 ≤ L* < 45, 45 ≤ L* < 65, and 65 ≤ L* < 85 and chroma classifications obtained by classifying values of chroma C* into 0 ≤ C* < 30, 30 ≤ C* < 60, and 60 ≤ C* < 85 in each of the plurality of hue regions.

**7.** The can printing system (10) according to any one of claims 3 to 6, wherein, in the color guide (16),

the color coordinates of the one or more color patches of the plurality of color patches (14) are arranged in an achromatic region obtained by partitioning the color space into a region whose value of chroma C* is 2.0 or less, and
the color coordinates of the one or more color patches of the plurality of color patches (14) are arranged in a region other than the achromatic region in each of the plurality of hue regions.

**8.** The can printing system (10) according to any one of the preceding claims, wherein, in the color guide (16), a minimum value of a color difference between each color patch included in the plurality of color patches (14) and another color patch included in the plurality of color patches (14) is $2 \leq \Delta E_{00} \leq 9$.

**9.** The can printing system (10) according to any one of the preceding claims, wherein the metal base material is aluminum, an aluminum alloy, steel or a tin plate.

**10.** The can printing system (10) according to any one of the preceding claims, wherein the metal base material is a resin-coated metal plate.

**11.** The can printing system (10) according to any one of the preceding claims, wherein

the metal base material is a can body part of a can, and
each of the plurality of color patches (14) is a cut piece of the can body part.

**12.** The can printing system (10) according to claim 1, wherein
the inkjet printer directly prints the ink color on the surface of the can for calibration of the printing machine (12).

**13.** The can printing system (10) according to claim 1, wherein
the inkjet printer prints the ink color on a film.

## Patentansprüche

1. Dosenbedrucksystem (10), umfassend:

   eine Druckmaschine (12), die eine Oberfläche einer Metalldose bedruckt;
   eine Farbtabelle (16), die eine Vielzahl von Farbfeldern (14) umfasst, die durch Aufdrucken einer Druckfarbe der Druckmaschine (12) auf ein Metallbasismaterial erhalten werden, das ein Metall enthält, das mit dem der Metalldose identisch ist;
   einen Tintenstrahldrucker, der eine aus der Vielzahl von Farbfeldern ausgewählte Druckfarbe wiedergibt und einen Kalibrierungsdruck auf die Oberfläche einer Dose zur Kalibrierung der Druckmaschine (12) durchführt, und zwar so, dass eine Farbabweichung zwischen einer aus der Vielzahl von Farbfeldern (14) ausgewählten Druckfarbe und einer durch den Kalibrierungsdruck dargestellten Druckfarbe innerhalb eines vorgegebenen Farbabweichungsbereichs liegt; und
   einen Computer (18), der Daten für den Druckvorgang durch den Tintenstrahldrucker erzeugt und diese Daten an den Tintenstrahldrucker übermittelt.

2. Dosenbedrucksystem (10) gemäß Anspruch 1, wobei die Vielzahl von Farbfeldern (14) Farbfelder umfassen, die dadurch erhalten werden, dass die Druckfarbe der Druckmaschine (12) mit einem Drucker, dessen Bauart mit der der Druckmaschine (12) identisch ist, auf das Metallbasismaterial aufgedruckt wird, und/oder
   wobei die Vielzahl von Farbfeldern (14) ein Farbfeld umfasst, das durch Aufdrucken der Druckfarbe der Druckmaschine (12) auf das Metallbasismaterial unter Verwendung einer Tinte erhalten wird, die ein Pigment und/oder einen Farbstoff enthält, der mit dem der Druckfarbe der Druckmaschine (12) identisch ist.

3. Dosenbedrucksystem (10) gemäß einem der vorhergehenden Ansprüche, wobei

   wenn die Vielzahl von Farbfeldern (14) der Farbtabelle (16) einer Farbmessung unterzogen werden, um die Farbkoordinaten der Vielzahl von Farbfeldern (14) in einem Farbraum zu ermitteln,
   werden eine Vielzahl von Farbtonbereichen durch Segmentierung des Farbraums bei vorgegebenen Farbtonwinkeln erhalten, und es werden eine Vielzahl von Helligkeits-/Chromabereichen durch Segmentierung jedes der Vielzahl von Farbtonbereichen bei vorgegebenen Helligkeits- und Chromabereichen erhalten,
   die Farbkoordinaten eines oder mehrerer Farbfelder aus der Vielzahl von Farbfeldern (14) in allen Farbtonbereichen der Vielzahl von Farbtonbereichen angeordnet sind, und
   die Farbkoordinaten eines oder mehrerer Farbfelder aus der Vielzahl von Farbfeldern (14) in vorgegebenen Helligkeits-/Chromabereichen liegen, die die Hälfte oder mehr der Vielzahl von Helligkeits-/Chromabereichen ausmachen,
   wobei die Vielzahl von Farbtonbereichen optional Bereiche umfasst, die durch Klassifizierung der Werte eines Farbtonwinkels h° in Abständen von 5° bis 20° ermittelt werden.

4. Dosenbedrucksystem (10) gemäß Anspruch 3, wobei die Vielzahl von Farbtonbereichen Bereiche umfasst, die durch Klassifizierung der Werte eines Farbtonwinkels h° in 10 ° ≤ h°< 20 °, 20 ° ≤ h°< 30 °, 30 ° ≤ h°< 40 °, 40 ° ≤ h°< 50 °, 50 ° ≤ h°< 60 °, 60 ° ≤ h°< 75 °, 75 ° ≤ h°< 90 °, 90 ° ≤ h°< 105 °, 105 ° ≤ h°< 120 °, 120 ° ≤ h°< 135 °, 135 ° ≤ h°< 140 °, 140 ° ≤ h°< 155 °, 155 ° ≤ h°< 170 °, 170 ° ≤ h°< 180 °, 180 ° ≤ h°< 190 °, 190 ° ≤ h°< 200 °, 200 ° ≤ h°< 215 °, 215 ° ≤ h°< 235 °, 235 ° ≤ h°< 255 °, 255 ° ≤ h°< 265 °, 265 ° ≤ h°< 285 °, 285 ° ≤ h°< 295 °, 295 ° ≤ h°< 305 °, 305 ° ≤ h°< 315 °, 315 ° ≤ h°< 330 °, 330 ° ≤ h°< 350 °, 350 ° ≤ h°< 360 °, und 360 ° ≤ h°< 10 ° Schritte erhalten werden.

5. Dosenbedrucksystem (10) gemäß Anspruch 3 oder 4, wobei die Vielzahl von Helligkeits-/Chromabereichen eine Vielzahl von Helligkeits-/Chromabereichen umfasst, die anhand einer Vielzahl von Helligkeitsklassifizierungen klassifiziert sind, welche durch Klassifizierung von Helligkeitswerten L* alle 10 bis 30 und einer Vielzahl von Chromaklassifikationen, die durch Klassifizieren von Chromawerten C* alle 20 bis 40 in jedem der Vielzahl von Farbtonbereichen erhalten werden.

6. Dosenbedrucksystem (10) gemäß einem der Ansprüche 3 bis 5, wobei die Vielzahl von Helligkeits-/Chromabereichen neun Helligkeits-/Chromabereichen umfasst, die anhand von Helligkeitsklassifizierungen klassifiziert sind, die durch Klassifizierung von Helligkeitswerten L* in die Bereiche 28 ≤ L* < 45, 45 ≤ L* < 65 und 65 ≤ L* < 85 sowie Chromaklassifizierungen, die durch Klassifizierung von Chromawerten C* in die Bereiche 0 ≤ C* < 30, 30 ≤ C* < 60 und 60 ≤ C* < 85 in jedem der Vielzahl von Farbtonbereichen erhalten werden.

7. Dosenbedrucksystem (10) gemäß einem der Ansprüche 3 bis 6, wobei, in dem Farbtabelle (16),

die Farbkoordinaten des einen oder der mehreren Farbfelder aus der Vielzahl von Farbfeldern (14) in einem achromatischen Bereich liegen, der durch Unterteilung des Farbraums in einen Bereich mit einem Chromawert C* von 2,0 oder weniger entsteht, und
die Farbkoordinaten des einen oder der mehreren Farbfelder der Vielzahl von Farbfeldern (14) in jedem der Vielzahl von Farbtonbereichen in einem anderen Bereich als dem achromatischen Bereich angeordnet sind.

**8.** Dosenbedrucksystem (10) gemäß einem der vorhergehenden Ansprüche, wobei in der Farbtabelle (16) der Minimalwert einer Farbabweichung zwischen jedem der in der Vielzahl von Farbfeldern (14) enthaltenen Farbfelder und einem anderen der in der Vielzahl von Farbfeldern (14) enthaltenen Farbfelder $2 \leq \Delta 00 \leq 9$ beträgt.

**9.** Dosenbedrucksystem (10) gemäß einem der vorhergehenden Ansprüche, wobei das Metallbasismaterial Aluminium, eine Aluminiumlegierung, Stahl oder Weißblech ist.

**10.** Dosenbedrucksystem (10) gemäß einem der vorhergehenden Ansprüche, wobei das Metallbasismaterial eine harzbeschichtete Metallplatte ist.

**11.** Dosenbedrucksystem (10) gemäß einem der vorhergehenden Ansprüche, wobei das Metallbasismaterial ein Dosenkörperteil einer Dose ist, und
jedes der Vielzahl von Farbfeldern (14) ein ausgeschnittenes Stück des Dosenkörpers ist.

**12.** Dosenbedrucksystem (10) gemäß Anspruch 1, wobei
der Tintenstrahldrucker die Druckfarbe zur Kalibrierung der Druckmaschine (12) direkt auf die Oberfläche der Dose druckt.

**13.** Dosenbedrucksystem (10) gemäß Anspruch 1, wobei der Tintenstrahldrucker die Druckfarbe auf eine Folie druckt.

**Revendications**

**1.** Système d'impression de canette (10) comprenant :

une machine d'impression (12) qui effectue une impression sur une surface d'une canette en métal ;
un guide de couleurs (16) qui inclut une pluralité d'échantillons de couleur (14) qui sont obtenus en imprimant une couleur d'encre de la machine d'impression (12) sur un matériau de base en métal qui contient un métal identique à celui de la canette en métal ;
une imprimante à jet d'encre qui reproduit une couleur d'encre qui est sélectionnée parmi la pluralité d'échantillons de couleur et qui effectue une impression pour un étalonnage sur une surface d'une canette pour un étalonnage de la machine d'impression (12) de telle sorte qu'une différence de couleur entre une couleur d'encre qui est sélectionnée parmi la pluralité d'échantillons de couleur (14) et une couleur d'encre qui est exprimée par l'impression pour un étalonnage tombe à l'intérieur d'une plage prédéterminée d'une différence de couleur ; et
un ordinateur (18) qui génère des données pour effectuer une impression au moyen de l'imprimante à jet d'encre et qui fournit les données à l'imprimante à jet d'encre.

**2.** Système d'impression de canette (10) selon la revendication 1, dans lequel la pluralité d'échantillons de couleur (14) inclut des échantillons de couleur qui sont obtenus en imprimant la couleur d'encre de la machine d'impression (12) sur le matériau de base en métal au moyen d'une imprimante d'un type identique à celui de la machine d'impression (12) ; et/ou dans lequel :
la pluralité d'échantillons de couleur (14) inclut un échantillon de couleur qui est obtenu en imprimant la couleur d'encre de la machine d'impression (12) sur le matériau de base en métal en utilisant une encre qui contient un pigment et/ou un colorant qui sont et/ou est identique(s) à ceux et/ou celui de l'encre de la machine d'impression (12).

**3.** Système d'impression de canette (10) selon l'une quelconque des revendications précédentes, dans lequel :

lorsque les échantillons de couleur de la pluralité d'échantillons de couleur (14) du guide de couleurs (16) sont soumis à des mesures de couleur afin d'acquérir des coordonnées de couleur de la pluralité d'échantillons de couleur (14) sur un espace de couleurs,
des régions de nuance d'une pluralité de régions de nuance sont obtenues en segmentant l'espace de couleurs selon des angles de nuance prédéterminés, et des régions de luminosité/chrominance d'une pluralité de régions

de luminosité/chrominance sont obtenues en segmentant chacune de la pluralité de régions de nuance selon des largeurs de luminosité prédéterminées et des largeurs de chrominance prédéterminées,
des coordonnées de couleur d'un ou de plusieurs échantillons de couleur de la pluralité d'échantillons de couleur (14) sont disposées dans toutes les régions de nuance de la pluralité de régions de nuance, et
des coordonnées de couleur d'un ou de plusieurs échantillons de couleur de la pluralité d'échantillons de couleur (14) sont disposées dans des régions de luminosité/chrominance prédéterminées qui représentent la moitié ou plus de la pluralité de régions de luminosité/chrominance,
en option, dans lequel la pluralité de régions de nuance inclut des régions qui sont obtenues en classifiant des valeurs d'un angle de nuance h° tous les 5° à 20°.

**4.** Système d'impression de canette (10) selon la revendication 3, dans lequel les régions de nuance de la pluralité de régions de nuance incluent des régions qui sont obtenues en classifiant des valeurs d'un angle de nuance h° selon $10° \leq h° < 20°$, $20° \leq h° < 30°$, $30° \leq h° < 40°$, $40° \leq h° < 50°$, $50° \leq h° < 60°$, $60° \leq h° < 75°$, $75° \leq h° < 90°$, $90° \leq h° < 105°$, $105° \leq h° < 120°$, $120° \leq h° < 135°$, $135° \leq h° < 140°$, $140° \leq h° < 155°$, $155° \leq h° < 170°$, $170° \leq h° < 180°$, $180° \leq h° < 190°$, $190° \leq h° < 200°$, $200° \leq h° < 215°$, $215° \leq h° < 235°$, $235° \leq h° < 255°$, $255° \leq h° < 265°$, $265° \leq h° < 285°$, $285° \leq h° < 295°$, $295° \leq h° < 305°$, $305° \leq h° < 315°$, $315° \leq h° < 330°$, $330° \leq h° < 350°$, $350° \leq h° < 360°$ et $360° \leq h° < 10°$.

**5.** Système d'impression de canette (10) selon la revendication 3 ou 4, dans lequel les régions de luminosité/chrominance de la pluralité de régions de luminosité/chrominance incluent une pluralité de régions de luminosité/chrominance qui sont classifiées au moyen d'une pluralité de classifications de luminosité qui sont obtenues en classifiant des valeurs de luminosité L* tous les 10 à 30 et au moyen d'une pluralité de classifications de chrominance qui sont obtenues en classifiant des valeurs de chrominance C* tous les 20 à 40 dans chacune de la pluralité de régions de nuance.

**6.** Système d'impression de canette (10) selon l'une quelconque des revendications 3 à 5, dans lequel la pluralité de régions de luminosité/chrominance inclut neuf régions de luminosité/chrominance qui sont classifiées au moyen de classifications de luminosité qui sont obtenues en classifiant des valeurs de luminosité L* selon $28 \leq L^* < 45$, $45 \leq L^* < 65$ et $65 \leq L^* < 85$ et au moyen de classifications de chrominance qui sont obtenues en classifiant des valeurs de chrominance C* selon $0 \leq C^* < 30$, $30 \leq C^* < 60$ et $60 \leq C^* < 85$ dans chacune de la pluralité de régions de nuance.

**7.** Système d'impression de canette (10) selon l'une quelconque des revendications 3 à 6, dans lequel, dans le guide de couleurs (16),

les coordonnées de couleur des un ou plusieurs échantillons de couleur de la pluralité d'échantillons de couleur (14) sont agencées dans une région achromatique qui est obtenue en partitionnant l'espace de couleurs selon une région dont la valeur de chrominance C* est de 2,0 ou moins ; et
les coordonnées de couleur des un ou plusieurs échantillons de couleur de la pluralité d'échantillons de couleur (14) sont agencées dans une région autre que la région achromatique dans chacune de la pluralité de régions de nuance.

**8.** Système d'impression de canette (10) selon l'une quelconque des revendications précédentes, dans lequel, dans le guide de couleurs (16), une valeur minimum d'une différence de couleur entre chaque échantillon de couleur inclus dans la pluralité d'échantillons de couleur (14) et un autre échantillon de couleur inclus dans la pluralité d'échantillons de couleur (14) est $2 \leq \Delta_{00} \leq 9$.

**9.** Système d'impression de canette (10) selon l'une quelconque des revendications précédentes, dans lequel le matériau de base en métal est de l'aluminium, un alliage d'aluminium, de l'acier ou une plaque en étain.

**10.** Système d'impression de canette (10) selon l'une quelconque des revendications précédentes, dans lequel le matériau de base en métal est une plaque en métal recouverte de résine.

**11.** Système d'impression de canette (10) selon l'une quelconque des revendications précédentes, dans lequel le matériau de base en métal est une partie de corps de canette d'une canette, et
chacun de la pluralité d'échantillons de couleur (14) est une pièce découpée de la partie de corps de canette.

**12.** Système d'impression de canette (10) selon la revendication 1, dans lequel :
l'imprimante à jet d'encre imprime directement la couleur d'encre sur la surface de la canette pour un étalonnage de la machine d'impression (12).

**13.** Système d'impression de canette (10) selon la revendication 1, dans lequel l'imprimante à jet d'encre imprime la couleur d'encre sur un film.

14
16
10
22
24
20
22
24
30
CAN PRINTING SYSTEM
12
PRINTING MACHINE
CAN BODY MANUFACTURING SYSTEM
COLOR GUIDE MANUFACTURING SYSTEM
22
24
22
SHIPMENT
100

FIG. 1

10
CAN PRINTING SYSTEM
12
PRINTING MACHINE
18
COMPUTER
14
16
COLOR GUIDE

FIG. 2

30
COLOR GUIDE
MANUFACTURING SYSTEM
PRINTING MACHINE
32
COLORIMETER
34
COMPUTER
36

FIG. 3

START
PRINT INK COLORS OF PRINTING MACHINE ON SURFACE OF METAL BASE MATERIAL
S10
CUT METAL BASE MATERIAL AND FORM COLOR PATCHES
S20
SUBJECT COLOR PATCHES TO COLOR MEASUREMENT TO ACQUIRE COLOR COORDINATES
S30
ARRANGE COLOR COORDINATES OF COLOR PATCHES IN HUE REGIONS AND LIGHTNESS/CHROMA REGIONS
S40
END

FIG. 4

START
FORM CAN BODY PART
S10
PRINT INK COLORS OF PRINTING MACHINE ON SURFACE OF CAN BODY PART
S20
CUT CAN BODY PART AND FORM COLOR PATCHES
S30
SUBJECT COLOR PATCHES TO COLOR MEASUREMENT TO ACQUIRE COLOR COORDINATES
S40
ARRANGE COLOR COORDINATES OF COLOR PATCHES IN HUE REGIONS AND LIGHTNESS/CHROMA REGIONS
S50
END

FIG. 5

START
FORM CAN BODY PART
S10``
CUT OPEN CAN BODY PART AND FORM PLATE-LIKE BASE MATERIAL
S20``
PRINT INK COLORS OF PRINTING MACHINE ON SURFACE OF PLATE-LIKE BASE MATERIAL
S30``
CUT PLATE-LIKE BASE MATERIAL AND FORM COLOR PATCHES
S40``
SUBJECT COLOR PATCHES TO COLOR MEASUREMENT TO ACQUIRE COLOR COORDINATES
S50``
ARRANGE COLOR COORDINATES OF COLOR PATCHES IN HUE REGIONS AND LIGHTNESS/CHROMA REGIONS
S60``
END

FIG. 6

START
CLASSIFY COLOR SPACE INTO HUE REGION PER PREDETERMINED HUE ANGLE
S100
CLASSIFY HUE REGIONS INTO LIGHTNESS/CHROMA REGIONS PER LIGHTNESS RANGE AND CHROMA RANGE
S200
END

FIG. 7

CIELab
GY
Y
YR
G
R
HUE ANGLE h°
a*VALUE
N
BG
RP
B
PB
P
b*VALUE

FIG. 8

CIELab
GY-3
GY-2
GY-1
Y-2
Y-1
YR-3
YR-2
YR-1
G-1
R-3
R-2
G-2
R-1
HUE ANGLE h°
G-3
RP-3
a*VALUE
N
BG-1
RP-2
BG-2
RP-1
BG-3
P-3
B-1
B-2
PB-1
PB-2
PB-3
P-1
P-2
b*VALUE

FIG. 9

YR-3
●:COLOR COORDINATES OF COLOR PATCH 14
HIGH LIGHTNESS REGION
MIDDLE LIGHTNESS REGION
LOW LIGHTNESS REGION
L*VALUE
85
65
45
28
0
2
30
60
85
C*VALUE
LOW CHROMA /HIGH LIGHTNESS REGION
MIDDLE CHROMA/HIGH LIGHTNESS REGION
HIGH CHROMA/HIGH LIGHTNESS REGION
ΔE00
LOW CHROMA/MIDDLE LIGHTNESS REGION
MIDDLE CHROMA/MIDDLE LIGHTNESS REGION
HIGH CHROMA/MIDDLE LIGHTNESS REGION
LOW CHROMA/LOW LIGHTNESS REGION
MIDDLE CHROMA/LOW LIGHTNESS REGION
HIGH CHROMA/LOW LIGHTNESS REGION
ACHROMATIC REGION
LOW CHROMA REGION
MIDDLE CHROMA REGION
HIGH CHROMA REGION


FIG. 10

2200
COMPUTER
2218
DISPLAY DEVICE
2216
GRAPHIC CONTROLLER
2210
HOST CONTROLLER
2212
CPU
2214
RAM
2224
HARD DISK DRIVE
2222
COMMUNICATION I/F
2220
I/O CONTROLLER
NETWORK
2226
DVD DRIVE
2201
2230
ROM
2240
I/O CHIP
2242
KEYBOARD


FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005303572 A
- JP 2019184597 A
- JP 2019155771 A
- JP 2010002310 A